Europäisches Patentamt

European Patent Office

Office européen des brevets

(11) Publication number: **0 041 845**
**B1**

(12) **EUROPEAN PATENT SPECIFICATION**

(45) Date of publication of patent specification: 30.05.84

(51) Int. Cl.³: **G 02 B 5/32, G 02 B 27/17**

(21) Application number: **81302503.8**

(22) Date of filing: **05.06.81**

(54) **Light scanning apparatus.**

(30) Priority: **06.06.80 JP 76137/80**

(43) Date of publication of application:
**16.12.81 Bulletin 81/50**

(45) Publication of the grant of the patent:
**30.05.84 Bulletin 84/22**

(84) Designated Contracting States:
**DE FR GB**

(56) References cited:
**DE-A-2 750 946**
**US-A-3 619 033**
**US-A-3 951 509**
**US-A-4 026 630**
**US-A-4 113 343**

**APPLIED OPTICS, Vol. 18, No. 14, 15 July 1979**
**New York M.R. LATTA et al. "Design**
**Techniques for Forming 488-nm Holographic**
**Lenses with Reconstruction at 633 nm" pages**
**2418 to 2421**
**Patents Abstracts of Japan Vol. 4, No. 90, 27**
**June 1980 page 125P17**

(73) Proprietor: **FUJITSU LIMITED**
**1015, Kamikodanaka Nakahara-ku**
**Kawasaki-shi Kanagawa 211 (JP)**

(72) Inventor: **Matsumoto, Seikichi**
**314 Wakamatsu-cho Sano-shi**
**Tochigi, 327 (JP)**
Inventor: **Ikeda, Hiroyuki**
**1-12-1208, Wakabadai Asahi-ku**
**Yokohama-shi Kanagawa, 241 (JP)**

(74) Representative: **Sunderland, James Harry et al**
**HASELTINE LAKE & CO Hazlitt House 28**
**Southampton Buildings Chancery Lane**
**London WC2A 1AT (GB)**

# 0 041 845

**Description**

The present invention relates to light scanning apparatus.

Various light scanning apparatuses have been proposed. For example such apparatuses are proposed in United States Patent No. 3,619,033; in a paper entitled Holographic Laser Beam Deflector by R. V. Pole et al, introduced in Applied Optics Vol. 14 No. 4, April 1975; in United States Patent No. 3,953,105; in United States Patent No. 4,094,576 and in United States Patent No. 4,165,464. The apparatuses disclosed in these documents are known as light scanning apparatuses for scanning light beams with comparatively simple structures.

United States Patent No. 3,619,033 describes an apparatus which has a structure in which a hologram is arranged on a disk, thereby when a laser beam source radiates a beam for reproduction the laser beam is scanned through or as a result of the rotation of the disk.

However, the scanning locus obtained on a scanned medium by scanning of the laser beam is an arc having a curvature dependent upon the radius of the disk. Therefore the proposal of United States Patent No. 3,619,033 has a disadvantage in that scanning in a straight line or in accordance with a curve other than the arc mentioned above is impossible.

In the paper by R. V. Pole et al technology in which a laser beam is radiated from the centre of a drum onto the drum, on which a hologram is arranged, is proposed. Thereby a straight line scanning locus can be obtained. However, this technology allows for scanning only in straight lines; a free selection of curved scanning locuses is not possible. Moreover, the proposal has a disadvantage in that preparation of the hologram is difficult, because it must be prepared on the drum.

United States Patent Nos. 3,953,105 and 4,049,576 disclose respective apparatuses each for scanning light by arranging a hologram of a disk and by irradiating the hologram with a laser beam. Moreover, these documents disclose technology wherein the scanning locus can be compensated using a compensating optical system such as a cylindrical lens and thereby a desired scanning locus can be obtained.

However, it is still the case that only curves of curvature determined by the diameter of a hologram disk can be provided as the scanning locuses from a hologram when no compensating optical system is provided.

Moreover, United States Patent No. 4,165,464 discloses an apparatus for scanning by irradiating a hologram arranged on a rotating disk with a laser beam.

However, the apparatus of United States Patent No. 4,165,464 suffers a disadvantage in that a desired curved scanning locus or a straight-line scanning locus cannot be obtained.

Namely, the hologram used in such apparatus is so prepared that a laser beam is caused to converge onto a specified convergence point. Since the hologram arranged on the disk rotates, the convergence point rotates around an arc centred on the centre of the rotating disk. Therefore, the light (laser) beam is diffracted onto a circle of a radius which is equal to a distance between the convergence point of the hologram arranged on the disk and the centre of the rotating disk.

Applied Optics, Vol. 18, No. 14, 15 July 1979, New York, at pages 2418 to 2421, in an article by M. R. Latta et al., discloses the reconstruction of a hologram with a light beam of a reconstruction wavelength different from the wavelength used for construction of the hologram. The hologram recording material is insensitive to light of the reconstruction wavelength. Reconstruction defects caused by the use of different wavelengths are discussed.

According to the present invention there is provided light scanning apparatus, comprising a hologram obtained by interference of an object wave light beam and a reference wave light beam, a laser source operable to generate a reconstruction light beam for irradiating the hologram, and shift means for relatively shifting the reconstruction light beam and the hologram, thereby to obtain a scanning light beam, characterised in that the laser source is operable to generate the reconstruction light beam with a wavelength different from that of the object wave and reference wave light beams with which the hologram is obtained, to provide that the scanning light beam follows a desired scanning locus.

According to the present invention there is also provided a method of scanning with a light beam, comprising irradiating a hologram, obtained by interference of an object wave light beam and a reference wave light beam, with a reconstruction beam, and relatively moving the reconstruction light beam and the hologram, thereby to obtain a scanning light beam, characterised in that the reconstruction light beam, characterised in that the reconstruction light beam has a wavelength different from that of the object wave and reference wave light beams with which the hologram is obtained, to provide that the scanning light beam follows a desired scanning locus.

An embodiment of the present invention can provide light scanning apparatus with which straight-line or curved scanning locuses can be obtained without using a compensating optical system.

An embodiment of the present invention can provide a small size light scanning apparatus which can assure linear scanning.

An embodiment of the present invention can provide a small size light scanning apparatus which can assure a long linear scan track.

The present invention focuses attention upon the fact that the convergence position of a (hologram) reconstruction beam changes in accordance with the laser (reconstruction) beam radiation location when the wavelength of the reconstruction beam is changed from (is different from) the wavelength of coherent light used as reference and object waves at the time of generation (of the hologram) and uses this fact to provide light scanning apparatus.

Reference is made, by way of example, to the accompanying drawings, in which:—

Figures 1A, 1B and 1C are respective schematic diagrams for assistance in explaining the underlying principles of an embodiment of the present invention,

Figure 2 is a schematic diagram for assistance in explanation of a method of preparing a hologram for use in an embodiment of the present invention,

Figure 3 is a schematic diagram for assistance in explanation of reconstruction operations in light scanning apparatus embodying the present invention, for reconstructing a hologram prepared by the method illustrated in Figure 2,

Figures 4 and 5 are respective schematic diagrams for assistance in explanation of parameters of functions specifying a hologram locus,

Figures 6, 8 and 10 are respective graphical illustrations of light scanning locuses obtained when laser beams are scanned using holograms prepared by different methods, in embodiments of the present invention,

Figure 7 is a schematic diagram for assistance in explanation of a method of preparing a hologram, for use in an embodiment of the present invention, different from the method of Figure 2,

Figure 9 is a schematic diagram for assistance in explanation of still another method of preparing a hologram for use in an embodiment of the present invention, and

Figures 11 and 12 are respective perspective views of light scanning apparatuses embodying the present invention.

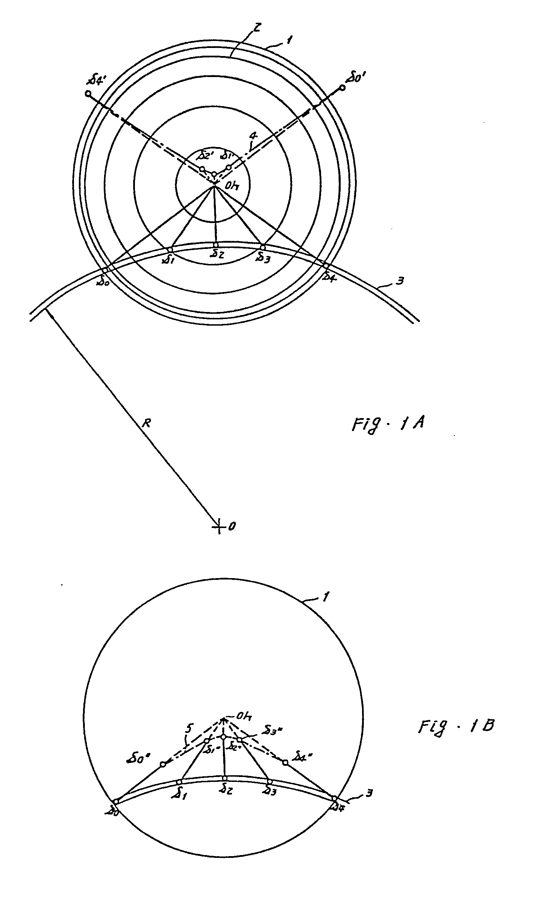

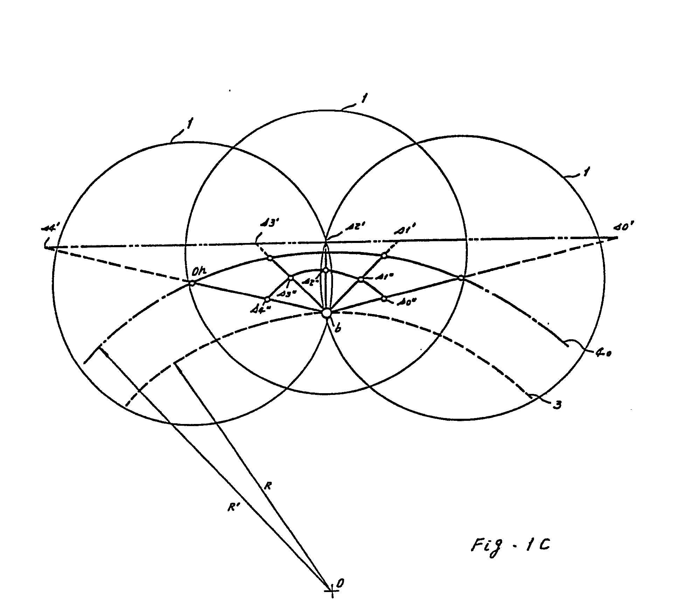

Figures 1A and 1B show front views of a hologram and are for assistance in explaining the forms of light beam diffraction caused by the hologram.

In Figures 1A and 1B, 1 is a hologram disk; 2 is a grating (interference pattern); 3 is a locus of a reconstruction beam on the hologram disk; oh is the centre of the hologram disk 1; s0, s1, s2, s3, s4 are spots on the hologram disk 1 onto which the reconstruction beam is irradiated; s0′ to s4′ and s0″ to s4″ are spots representing focus or convergence points of the hologram disk 1 upon reproduction; 4 and 5 are locuses of spots representing reconstruction focus or convergence points of the hologram disk 1.

The hologram disk 1 is made of photo-sensitive material. In this embodiment of the invention, interference fringes are generated at the surface of the photo-sensitive material by causing a coherent spherical wave of light having a light beam centre on a centre axis through oh and vertical to the plane of the Figures to interfere with a coherent plane wave of light. These interferences fringes are formed, in a case in which a spherical wave is used, with a density which is higher towards the periphery (of the disk) and lower towards the centre (of the disk).

The hologram disk 1 provided with interference fringes (an interference pattern, or a grating) 2 thus produced is reproduced or reconstructed.

When a reconstruction beam having a wavelength the same as that of a construction laser beam used to provide the interference fringes is irradiated onto the hologram disk 1, the laser beam is reconstructed in such a manner that it converges onto a (normal) focus of the hologram disk 1.

However, when the wavelength of a reconstruction light beam is longer than that of the construction light beam, the reconstruction beam converges differently, more sharply, onto the centre optical axis of the hologram disk than the ordinarily reproduced laser beam.

Therefore, when a reconstruction beam is scanned so that a scanning locus 3 thereof is obtained which lies on a circle of radius R (centred on an area including the hologram disk 1) the scanning locus 4 of the reproduced convergence points is as indicated by the chain line in Figure 1A. Namely, usually, a reconstruction beam irradiated onto the spot s0 is diffracted towards the centre axis oh by the grating 2. However, when the wavelength of the reconstruction beam is longer than that of an original (construction) light beam, the diffraction angle towards the centre axis becomes wider and light is converged onto a convergence point s0′. When the light of the reconstruction beam is irradiated onto spots s1, s2, s3, s4 the diffraction angles similarly become larger and the light is therefore converged onto points s1′, s2′, s3′ and s4′ respectively. In other words, an aberration is generated.

Here, it is assumed that the diffraction angle at the edge of hologram disk 1 is wider than that at the centre because the density of the diffraction grating of the hologram disk 1 is higher at its periphery than at its centre.

Moreover, when the wavelength of the reconstruction beam becomes smaller than that of an original light beam, a diffraction angle of a reconstruction beam becomes smaller than that provided when the hologram is reconstructed with an ordinary light beam (a light beam having the same wavelength as an original or construction light beam).

For this reason, under these conditions, in a case in which a reconstruction beam is scanned along a scanning locus 3 similar to that in Figure 1A, the resulting convergence points are distributed to spots s0″, s1″, s2″, s3″ and s4″ as shown in Figure 1B, in accordance with the locations of the spots s0, s1, s2, s3 and s4, namely separated spots are provided on a locus 5. In other words, an aberration is generated.

Focusing on this phenomenon provided by a hologram disk, the inventors of the present invention have devised a means of making it possible to freely set a reconstructed scanning locus.

An example of this will now be explained.

Figure 1C illustrates a case in which the hologram disk 1 used in Figure 1A is moved in such a manner that the centre axis oh of the disk moves on a circle with a centre O and reconstructed spots are scanned by irradiating with a reconstruction light beam fixed on a point b in Figure 1C.

In this case, when the wavelength of the reconstruction beam is equal to that of an original (construction) light beam, spots are reproduced (reconstructed) on the locus 40 of the centre axis oh of the hologram disk.

However, when a reconstruction beam the wavelength of which is different from that of the original (construction) light beam, is used, reconstructed spots move on a locus provided on the combined effects of the abovementioned aberration and the locus of movement of (the centre axis of the) hologram disk 1. Therefore, when a reconstruction beam the same as that used in Figure 1A is used, the locus of aberration of the hologram disk is combined with the locus of movement of the hologram (centre axis), and thereby spots s0′, s1′, s2′, s3′ and s4′ are reconstructed along an almost linear line.

When a reconstruction beam as used in Figure 1B is employed, reconstructed spots s0″ to s4″ are provided on a curve having a radius of curvature which is smaller than the radius of the circular locus of the centre axis oh of the hologram disk.

The scanning locuses of these reconstructed spots will now be considered in more detail.

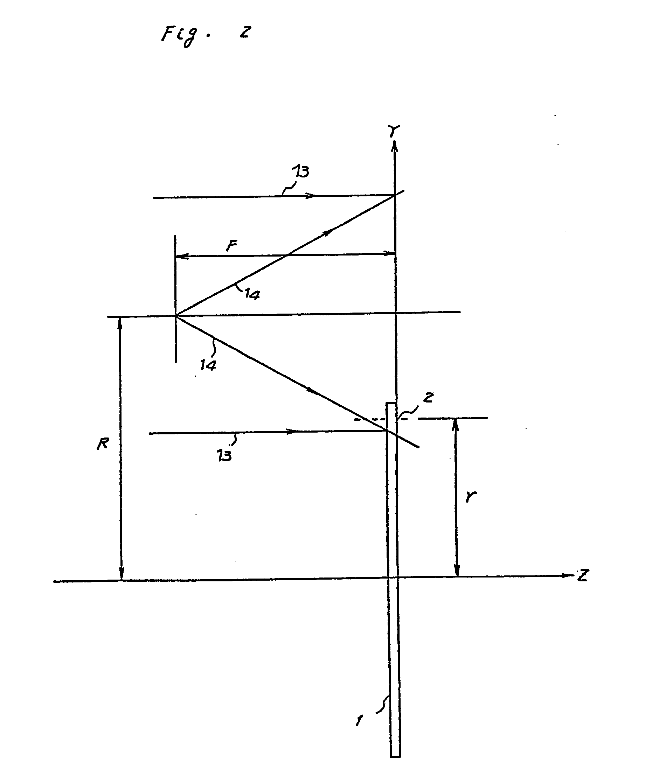

Figure 2 illustrates a method of producing a hologram by interference of a plane wave and a spherical wave, as one example of a method of generating a hologram disk.

In Figure 2, a (hatched) hologram 2 is formed at the periphery of a disk 1 having a centre axis Z. A plane wave 13 and a spherical wave 14, having its focus on a coordinate (R, F), are caused to interfere by applying these waves orthogonally to the disk surface around axis Z and then the hologram is picked-up by gradually rotating the disk through specified angles around the axis Z; thereby a hologram disk wherein holograms are arranged in the form of concentric rings on the disk can be obtained.

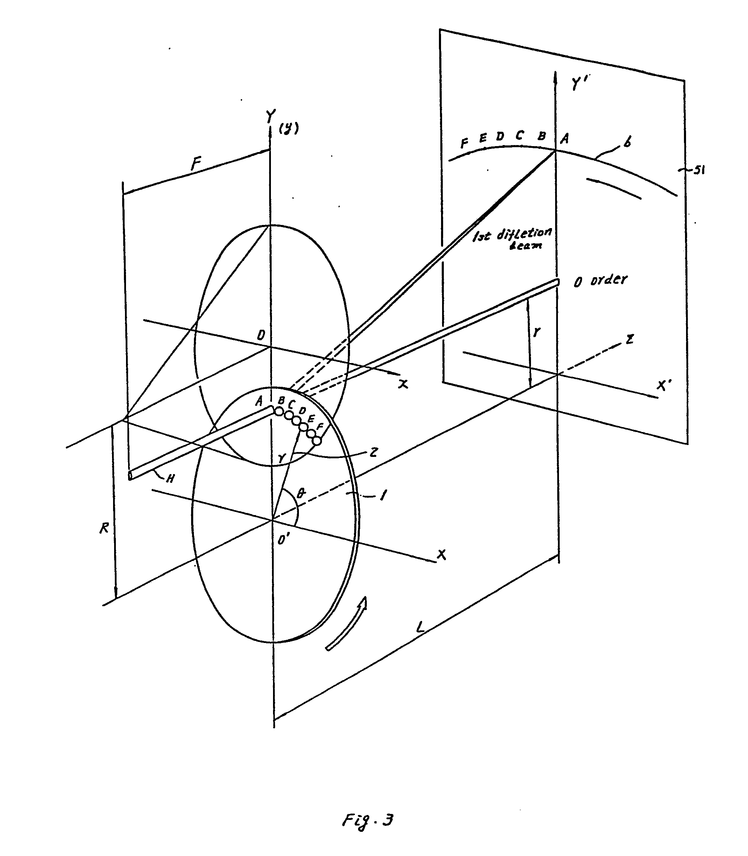

Figure 3 illustrates a reconstruction operation in hologram scanning apparatus and scanning lines formed on a screen 51 at a plane including a convergence point.

In Figure 3, the hologram disk 1 is rotating for receiving a reproduction or reconstruction laser beam H which impinges upon a point A on a circumference of radius r of the hologram. After specified periods, points B, C, D, E and F reach the position of point A and a scanning line 6 is formed on screen 51 as illustrated with the sequence of letters A→B→C→D→E→F along the line 6 corresponding to respective reconstructed points. Usually, this scanning line forms an arc.

In order to make plain the effect of reconstruction light beam wavelength on the scanning line 6, there will now be calculated scan coordinates on the screen 51 in correspondence to the rotation of disk 1.

Scan coordinates in the screen (X, Y) plane will be expressed using parameters (X, Y) in relation to Figure 3. Analysis is first performed using plane polar coordinates (r, $\theta$) with the centre of rotation of the hologram disk considered as origin 0 of the coordinates.

When the phase distribution on the hologram is expressed by a phase function $\Phi$ (r, $\theta$), and when the wavelength of light used for generating the hologram is taken to be $\lambda_c$, and the coordinates of the focus of the spherical wave used in the generation of the hologram are taken to be (F, R), the phase function $\Phi$ (r, $\theta$) can be expressed as follows.

$$\Phi(r, \theta) = \frac{2\pi}{\lambda_c}(\sqrt{F^2 + r^2 - 2rR\sin\theta + R^2} - F) \qquad (1)$$

The spatial frequencies of interference fringes in the r axis direction and the $\theta$ axis direction at a point (r, $\theta$) can be calculated from this phase function $\Phi$ (r, $\theta$). When the r direction and $\theta$ direction elements of the spatial frequency are respectively taken to be $f_r$ (r, $\theta$) and $f_\theta$ (r, $\theta$), the following relationships can be obtained.

$$f_r(r, \theta) = \frac{1}{2\pi}\frac{\partial\Phi}{\partial r} \qquad (2)$$

$$= \frac{1}{\lambda_c}\frac{|r - R\sin\theta|}{\sqrt{F^2 + r^2 - 2rR\sin\theta + R^2}} \qquad (3)$$

$$f_\theta(r, \theta) = \frac{1}{2\pi} \cdot \frac{1}{\gamma} \frac{\partial \Phi}{\partial \theta} \qquad (4)$$

$$= \frac{1}{\lambda_c} \frac{|R\cos\theta|}{\sqrt{F^2+r^2-2rR\sin\theta+R^2}} \qquad (5)$$

Where

$$d_r = \frac{1}{f_r(r, \theta)} \qquad (6)$$

$$d_\theta = \frac{1}{f_\theta(r, \theta)} \qquad (7)$$

$d_r$, $d_\theta$ are pitches of interference fringes in the r direction and the $\theta$ direction.

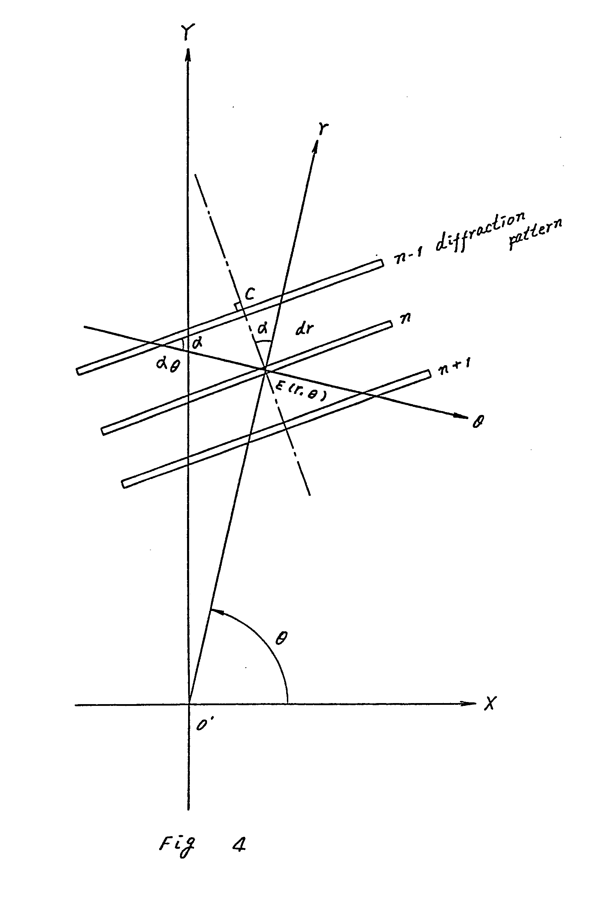

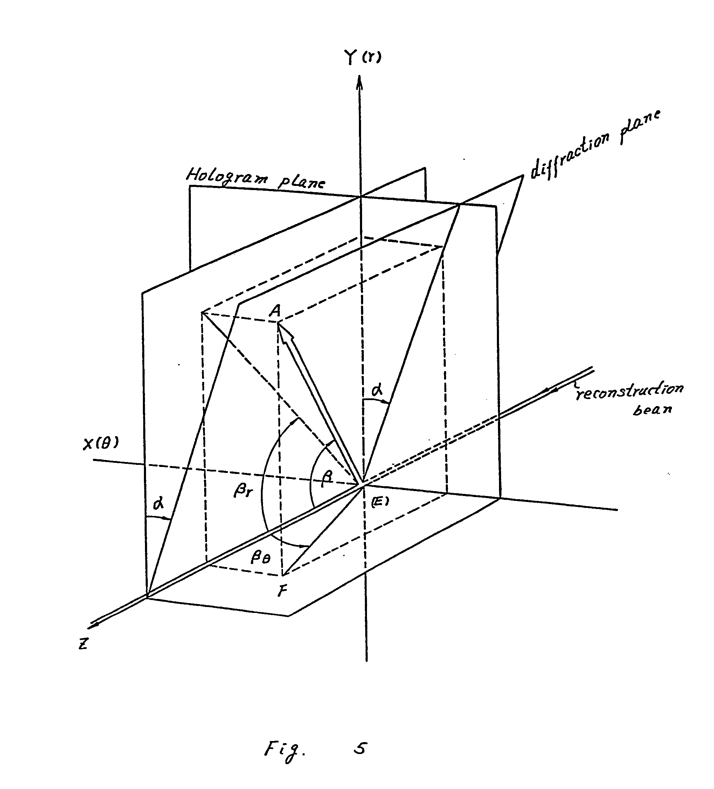

Figure 4 is an enlarged view of interference fringes at a point E $(r, \theta)$. In Figure 4, the laser beam H for reconstruction orthogonally crosses the hologram disk surface (XY) and enters the point E.

The primary diffracted beam of the hologram proceeds into a deflected plane with a deflection angle $\beta$ in the CE direction in Figure 4 orthogonally crossing the interference fringes.

At this time, the gradient $\alpha$ of deflected plane with respect to the r direction and the deflection angle $\beta$ of the primary diffracted beam can be obtained from equations (6), (7) and (3), (5). Namely, gradient of the deflected plane is expressed as follows.

$$\alpha = \tan^{-1}\frac{d_r}{d_\theta} \qquad (8)$$

$$= \tan^{-1}\frac{f_\theta}{f_r} \qquad (9)$$

$$= \tan^{-1}\frac{|R\cos\theta|}{|\gamma-R\sin\theta|} \qquad (10)$$

The deflection angle $\beta$ can be expressed as follows from the basic diffraction equation when the reproduction or reconstruction wavelength is taken to be $\lambda_R$.

$$\beta = \sin^{-1}\frac{\lambda_R}{\overline{EC}} \qquad (11)$$

$$= \sin^{-1}\frac{\lambda_R \cdot f_r}{\cos\alpha} \qquad (12)$$

$$= \sin^{-1}\left\{ \left(\frac{\lambda_R}{\lambda_c}\right) \left(\frac{1}{\cos\alpha}\right) \frac{|r-R\sin\theta|}{\sqrt{F^2+r^2-2rR\sin\theta+R^2}} \right\} \qquad (13)$$

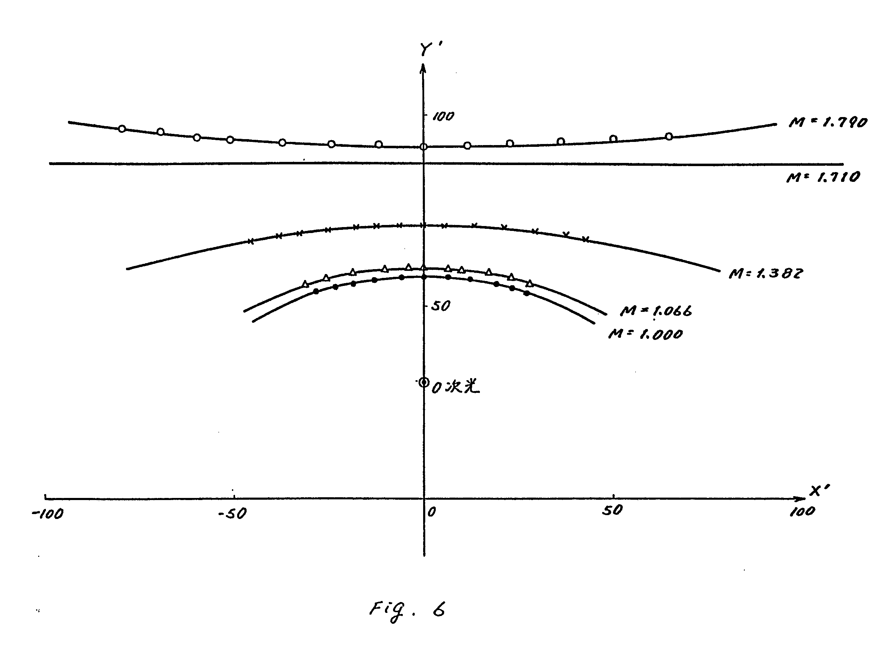

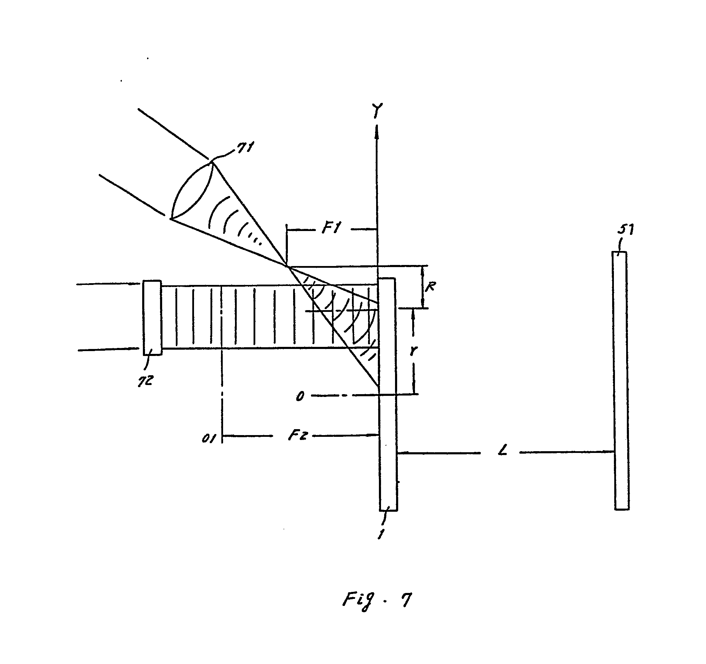

Figure 5 shows diffraction conditions as viewed from the direction of the Z axis, when the hologram disk 1 rotates and the point E reaches the point A (in Figure 3, e.g. is subjected to the, reconstruction beam).

Here, $\overrightarrow{AE}$ is a unit vector in the direction of the primary diffracted beam. The scan coordinates X, Y on the screen can be expressed as follows when the deflection angles $\beta_r$, $\beta_\theta$ in the Y direction (matching the r direction) and X direction ($\theta$ direction) are known.

$$X = L\,\tan\beta_\theta \qquad (14)$$
$$Y = L\,\tan\beta_r + r \qquad (15)$$

$\beta_\theta$, $\beta_r$ can be expressed by the following equations because they are related to $\alpha$, $\beta$ from Figure 5.

$$\tan \beta_r = \tan \beta \cos\alpha \qquad (16)$$
$$\tan \beta_\theta = \tan \beta \sin\alpha \qquad (17)$$

From equations (14), (15) and (10), (13), the coordinates X, Y of reconstructed spots can be obtained.

$$X = L \tan \beta \sin\alpha \qquad (18)$$
$$Y = L \tan \beta \cos\alpha + r \qquad (19)$$

$$\alpha = \tan^{-1} \left| \frac{R\cos\theta}{r - R\sin\theta} \right| \qquad (20)$$

$$\beta = \sin^{-1} \left\{ \left(\frac{\lambda_R}{\lambda_c}\right) \left(\frac{1}{\cos\alpha}\right) \frac{|r = R\sin\theta|}{\sqrt{F^2 + r^2 - 2rR\sin\theta + R^2}} \right\} \qquad (21)$$

The relationship between scan coordinates and hologram construction and reconstruction conditions will be plain from the above explanation. Namely, equations (20) and (21) teach that the scan coordinates depend upon the following three factors.
(1) Hologram construction, reconstruction wavelength ratio $(\lambda_R/\lambda_c)$
(2) Radius of hologram disk (r)
(3) Parameter of hologram construction (R, F).
R, F give the crossing angle $\delta$ between the spherical wave and plane wave (used for construction) of the hologram at the position (point A) of the disk radius.

$$\delta = \tan^{-1}\left(\frac{R-r}{F}\right) \qquad (22)$$

The scan locus is determined through the interrelationship of the three factors. The equations above teach that when the radius r to the light (re-construction) beam irradiation location, the distance R from the disk centre to the centre of optical axis (e.g. of the spherical wave for construction) and the distance F from the spherical wave irradiation position (during construction) to the hologram are determined, the scanning locus changes in dependence upon the ratio of the reconstruction wavelength $\lambda_R$ to the construction wavelength $\lambda_c$ of the hologram.

On the basis of the abovementioned theoretical equations, actual calculations have been conducted for practical examples using respective selected values as a basis for the calculations, and experiments checking the results of the calculations have been made.

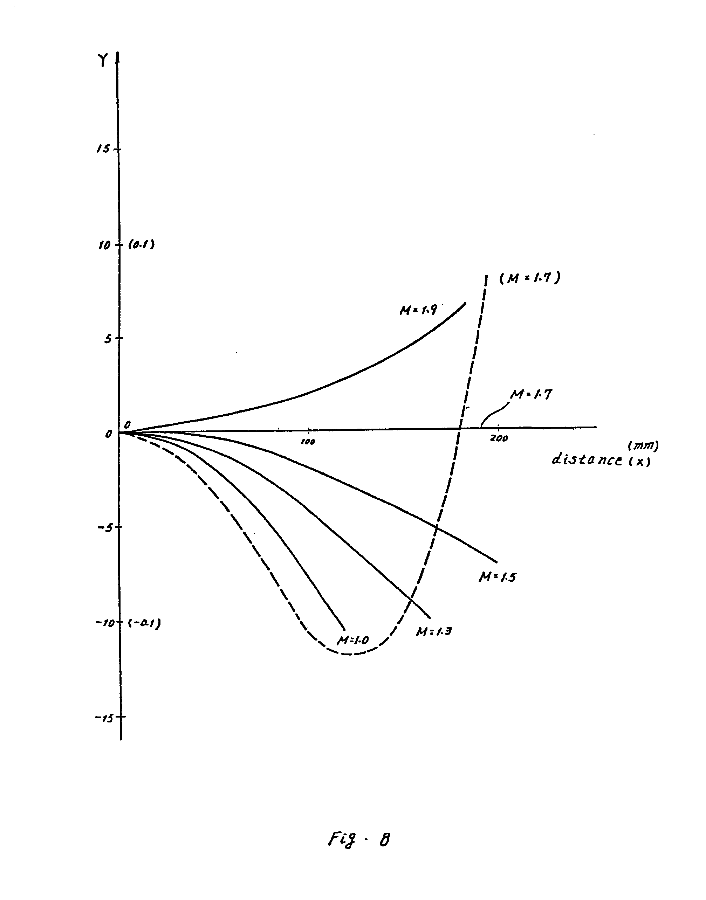

Figure 6 illustrates characteristics of one embodiment of the present invention.

In this case, disk radius r=65 mm, coordinates of focus of spherical wave F=100 mm, R=106.8 mm, screen distance L=300 mm. With values of wavelength ratio $M=\lambda_R/\lambda_c$ taken to be 1.0, 1.066, 1.382, 1.790, the coordinates X, Y on the screen (of resulting scan locuses) are calculated using equations (18) to (21) and the results are plotted in Figure 6. This corresponds to cases in which the hologram construction wavelength $\lambda_c$ is set to 457.9 nm and the reconstruction wavelength $\lambda_R$ is set to 457.9 nm, 488 nm, 632.8 nm and 820 nm respectively.

The characteristics of Figure 6 indicate that linearity of scanning locus can be improved by increasing the ratio of hologram construction wavelength $\lambda_c$ and reconstruction wavelength $\lambda_R$.

In regard to the wavelength of scanning line provided, when the hologram is reconstructed, for example, by light of a wavelength 820 nm using a semiconductor laser, the scanning line can reach about 3 times (300 mm) the length of a conventional scanning line.

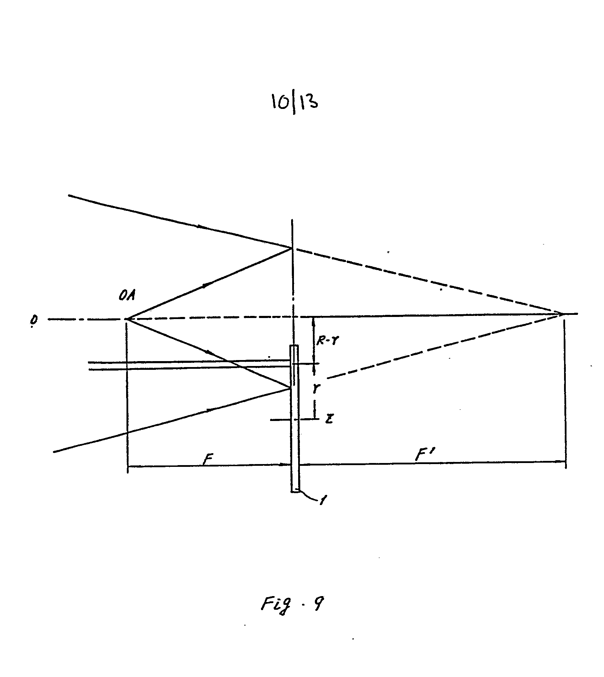

Figure 7 illustrates construction of a hologram for another embodiment of the present invention. For this embodiment, the hologram is constructed using a cylindrical wave object beam and a spherical wave reference beam.

In Figure 7, 71 is a spherical lens; 72 is a cylindrical lens and 1 is the hologram disk. Coherent plane wave laser beams are irradiated onto the spherical lens 71 and cylindrical lens 72. One laser beam is converted into a spherical wave beam by the spherical lens 71. The other laser beam is converted into a cylindrical wave beam by the cylindrical lens 72. The laser beams subjected to wave surface conversion by the respective lenses form the diffraction grating on the disk 1 in the same way as for the aforementioned embodiments.

Figure 8 shows the locuses, for various wavelength ratios, of the reconstructed spots obtained by reconstruction of the hologram obtained as explained with reference to Figure 7.

The parameters used for obtaining Figure 8 are as follows.

6

| | |
|---|---|
| Radius (r) of disk 1: | 50 mm |
| Distance from the convergence point O1 of the cylindrical wave surface to the hologram disk 1 (F$_2$): | 80.6 mm |
| Distance from the convergence point O2 of the spherical wave surface to the hologram disk 1 (F$_1$): | 50.3 mm |
| Distance from the vertical projection of the convergence point of the spherical wave onto the hologram disk to the edge of the spherical wave on the hologram disk (R): | 20.1 mm |
| Distance to screen 51 (L): | |

In Figure 8, the broken line illustrates a scanning locus with a wavelength ratio of 1.7 with an enlarged vertical scale to better show deviation from a straight line. In this case, the hologram construction wavelength $\lambda_C$ is 457.9 nm and the reconstruction wavelength $\lambda_R$ is 780 nm. The enlarged scale is indicated in parentheses in Figure 8.

From Figure 8, it is seen that substantially linear scanning is possible even in this example within a scanning distance or range of ±200 nm. It will be understood that deviation from linearity is within ±0.1 mm.

Figure 9 illustrates a method of constructing a hologram for a further embodiment of the present invention. For this embodiment, the hologram is constructed by interference of a converging spherical wave and a diverging spherical wave.

In Figure 9, the diverging spherical wave has a centre of divergence OA on an axis O which is vertical to the plane including the hologram 1.

In addition, the convergence point OB of the converging spherical wave is arranged at a location in opposition to the centre OA of divergence on the axis O through the hologram surface.

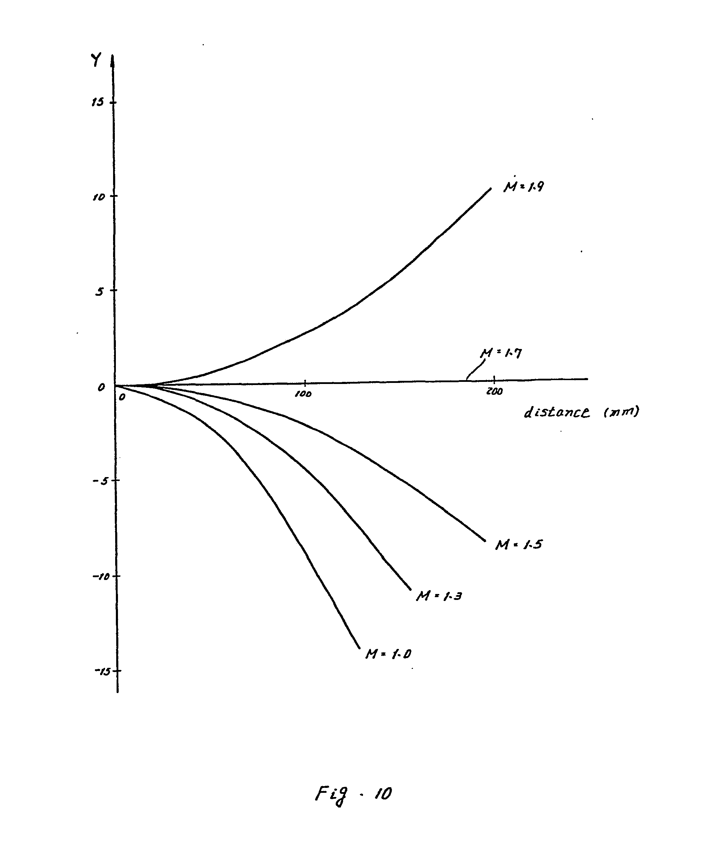

With parameters as indicated in Figure 9 set to the values shown in the following Table, scanning locuses are obtained as shown in Figure 10.

TABLE

| | |
|---|---|
| F | 189 mm |
| F′ | 264.6 mm |
| R—r | 47.25 mm |
| r | 40 mm |
| L (distance up to the screen) | 500 mm |

In Figure 10, the vertical axis corresponds to the Y axis of the screen in Figure 3 and indicates deviations from a straight scanning line. The horizontal axis corresponds to the X axis of the screen and indicates distance from the Y axis of the screen.

In reality, Figure 10 is arranged in line-symmetry to the Y axis and the locus when combined with Figure 10 becomes the constructed light beam.

The values given alongside each curve in Figure 10 indicate the wavelength ratio of construction and reconstruction light beams used to obtain the curve.

According to Figure 10, a light beam having a substantially linear scanning locus can be reconstructed.

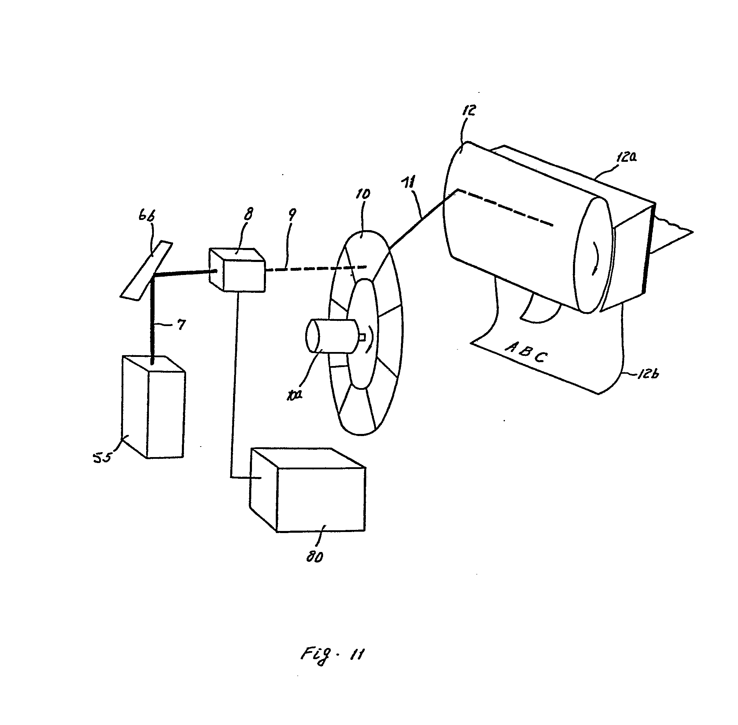

Figure 11 illustrates another embodiment of the present invention. In Figure 11, 55 is a laser source; 66 is a mirror; 7 is a reconstruction beam; 8 is a light modulator; 80 is a control unit; 9 is a modulated reconstruction beam; 10 is a hologram disk; 10a is a motor; 11 is a scanning beam; 12 is a photo-sensitive drum; 12a is a developer, and 12b is a printed sheet.

The hologram disk 10 is arranged on a disk as in the case of the hologram disk illustrated in Figures 2, 7 or 9. The hologram disk 10 is rotated by means of the motor 10a.

The reconstruction beam 7 emitted from the laser source 55 (having a freely adjustable wavelength) is reflected by the mirror 66 and then enters the light modulator 8. The light modulator turns the incident light beam ON or OFF in accordance with a control signal.

The control signal is supplied from the control unit 80. The control unit 80 generates control signals corresponding to white and black when an image to be printed is equally divided in the horizontal direction.

The light modulator 8 outputs the modulated reconstruction beam 9 by modulating the reconstruction beam 7 in dependence upon the control signal.

As explained above, this output beam 9 is irradiated onto the hologram disk 10 which is rotated by the motor 10a. The hologram disk 10 diffracts the modulated reconstruction beam based on the above explained principles due to its rotation.

The modulated reconstruction beam linearly scans the photo-sensitive drum 12.

The photo-sensitive drum is sensitive to this beam and an electrostatic latent image is formed on its surface.

The photo-sensitive drum 12 having a latent image on its surface rotates in the direction indicated by the arrow in Figure 11. The developer 12a develops and fixes the latent image on the drum onto a printed sheet 12b.

Thereby letters to be printed, indicated by the control unit 80, are printed on the printed sheet 12b.

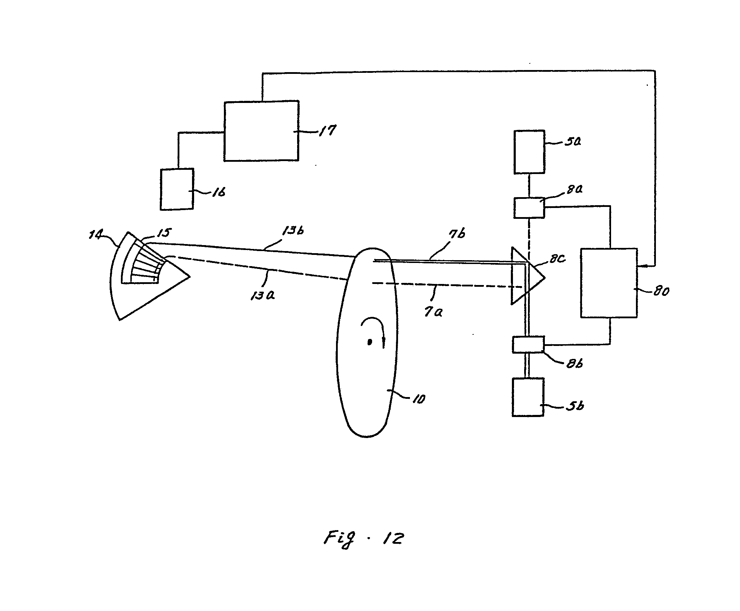

Figure 12 is a block diagram of an optical code reader provided by adopting scanning apparatus embodying the present invention.

In this Figure, 5a, 5b are light sources which output laser beams of different wavelengths. 8a, 8b are light switches. 8c is a prism mirror. 80 is a control unit. The control unit 80 selectively operates either one of the light switches. 7a, 7b are reconstruction beams of different wavelengths. 13a, 13b are scanning beams. 14 is a cone allowing the attachment of a bar code label 15 onto its surface. 16 is a photodetector which converts a reflected beam into an electrical signal. 17 is a decoder which decodes the bar code printed on the bar code label 15 using the output signal of photo-detector 16. 10 is a hologram disk which rotates as explained above.

Operations will be explained below. The control unit 80 activates the switch 8a for shielding the light beam of light source 5a. Thereby the light beam of light source 5b becomes the reconstruction beam 7b for the hologram 10 through action of the switch 8b and prism mirror 8c. The wavelength of this reconstruction beam 7b is so selected that the ratio of reconstruction and construction wavelengths is for example 1.5. Therefore, the scanning beam 13b scanned by the hologram 10 scans along a curve with a large radius of curvature. As a result, the light spots move through an area surrounding the bottom of the cone 14.

The light beam reflected from the bar code label 15 is detected by the photo detector 16. An output signal of detector 16 is decoded by the decoder 17. When the decoder 17 does not receive a signal corresponding to the reflected beam during a read-out scanning, the control unit 80 is informed. Thereby, the control unit 80 opens the switch 8a and closes the switch 8b. When the switch 8a opens, the reconstruction beam 7a is irradiated onto the hologram 10.

The wavelength of this reconstruction beam 7a is so selected, for example, that its ratio to the wavelength of construction beam is, for example, 1.3. The scanning beam 13a provided by the reconstruction beam 7a results in a smaller scanning locus curvature than that obtained by the scanning beam 13b, because the wavelength ratio is different. Therefore, the periphery of the cone, near the top of the cone, is scanned. Thus, when the label 15 is attached to the cone near the top of the cone, it is read by this beam 13a.

In an embodiment of the present invention, a hologram shift or scan locus may be linear and such a shift or scan locus can be selected freely in accordance with the light spot locus to be scanned.

As explained above, in embodiments of the present invention, scanning line locus can be changed, linearity in a specified plane can be improved, and a longer scanning line can be obtained by providing a difference between the wavelength of a coherent light beam used for halogram construction and the wavelength of a coherent reconstruction beam. Therefore, highly accurate linear scanning can be realised in the field without the use of an external compensating optical system, this contributing to reduction in size and reduction in costs of scanning apparatus.

Thus, the present invention relates to apparatus for scanning a laser beam by relatively moving a hologram which has the function of converging the light of a coherent laser beam, and particularly relates to light scanning apparatus which is capable of obtaining a desired scanning locus on a desired surface.

Light scanning apparatus according to the present invention can be applied to any system, for example, as apparatus for reading a bar code printed on a medium such as a price card by scanning the bar code with the light beam, as apparatus for printing letters, or figures on a sensitive medium by scanning the medium with a modulated light beam, or as apparatus which checks complicated printed patterns.

An embodiment of the present invention can provide light scanning apparatus for scanning with a reconstruction beam by relatively shifting a hologram for the reconstruction beam, wherein scanning is possible along freely selected curves and/or straight lines with the reconstruction beam, by providing a difference between the wavelength of a reconstruction beam and that of a coherent light beam which has been used for generating the hologram.

The hologram and the reconstruction beam may be shifted relatively, either rotationally, e.g. circularly, or linearly.

By suitable selection of the ratio of construction and reconstruction wavelengths a scanning locus of a curvature equal to the radius of curvature of the surface of a medium to be scanned can be provided. The surface may be cylindrical, conical or flat.

Although reference is made specifically only to laser sources, it will be understood that any light source having an effect equivalent to a laser source for the purposes of this invention can be employed in embodiments of this invention, and the term "laser source" will be understood accordingly,

## Claims

1. Light scanning apparatus, comprising a hologram obtained by interference of an object wave light beam and a reference wave light beam, a laser source operable to generate a reconstruction light beam for irradiating the hologram, and shift means for relatively shifting the reconstruction light beam and the hologram, thereby to obtain a scanning light beam, characterised in that the laser source is operable to generate the reconstruction light beam with a wavelength different from that of the object wave and reference wave light beams with which the hologram is obtained, to provide that the scanning light beam follows a desired scanning locus.

2. Apparatus as claimed in claim 1, wherein the hologram is obtained by interference of an object wave light beam having a spherical wave surface and a reference wave light beam having a plane wave surface.

3. Apparatus as claimed in claim 1, wherein the hologram is obtained by interference of an object wave light beam having a cylindrical wave surface and a reference wave light beam having a spherical wave surface.

4. Apparatus as claimed in claim 1, wherein the hologram is obtained by interference of an object wave light beam having a diverging spherical wave surface and a reference wave light beam having a converging spherical wave surface.

5. Apparatus as claimed in any preceding claim, wherein the shift means is operable to shift the hologram circularly in relation to the reconstruction beam.

6. Apparatus as claimed in any one of claims 1 to 4, wherein the shift means is operable to shift the hologram linearly in relation to the reconstruction beam.

7. Apparatus as claimed in claim 5, wherein the shift means comprise a disc having the hologram provided at the surface thereof, and rotation drive means for rotating the disc, whereby the hologram can be rotationally moved in a circular form by rotating the disc.

8. Apparatus as claimed in any preceding claim, further comprising a light modulator for modulating the reconstruction beam, and a photo-sensitive medium which is scanned by the scanning light beam, operable to form a desired image on the photo-sensitive medium.

9. Apparatus according to any preceding claim, further comprising a converter which is operable to convert light of the scanning light beam reflected from a medium to be scanned into an electrical signal, and means for detecting information carried by the electrical signal.

10. A method of scanning with a light beam, comprising irradiating a hologram, obtained by interference of an object wave light beam and a reference wave light beam, with a reconstruction light beam, and relatively moving the reconstruction light beam and the hologram, thereby to obtain a scanning light beam, characterised in that the reconstruction light beam has a wavelength different from that of the object wave and reference wave light beams with which the hologram is obtained, to provide that the scanning light beam follows a desired scanning locus.

**Patentansprüche**

1. Lichtabtastvorrichtung, mit einem Hologramm, welches durch Interferenz eines Objektwellenlichtstrahls und eines Referenzwellenlichtstrahls erzeugt ist, einer Laserquelle, welche einen Rekonstruktionslichtstrahl zur Bestrahlung des Hologramms erzeugen kann, und einer Verschiebeeinrichtung zur Verschiebung des Rekonstruktionslichtstrahls relativ zu dem Hologramm, um dadurch einen Abtastlichtstrahl zu erzeugen, dadurch gekennzeichnet, daß die Laserquelle betätigbar ist, um den Rekonstruktionslichtstrahl mit einer Wellenlänge zu erzeugen, welche von derjenigen der Objektwellen- und der Referenzwellenlichtstrahlen verschieden ist, mit welchen das Hologramm erzeugt ist, um vorzusehen, daß der Abtastlichtstrahl einem gewünschten Abtastort folgt.

2. Vorrichtung nach Anspruch 1, in welcher das Hologramm durch Interferenz eines Objektwellenlichtstrahls mit sphärischer Wellenfläche mit einem Referenzlichtstrahl mit planer Wellenfläche erzeugt ist.

3. Vorrichtung nach Anspruch 1, in welcher das Hologramm durch Interferenz eines Objektwellenlichtstrahls mit zylindrischer Wellenfläche mit einem Referenzwellenlichtstrahl mit sphärischer Wellenfläche erzeugt ist.

4. Vorrichtung nach Anspruch 1, bei welcher das Hologramm durch Interferenz eines Objektwellenlichtstrahls mit divergierender sphärischer Wellenfläche mit einem Referenzwellenlichtstrahl mit konvergierender sphärischer Wellenfläche erzeugt ist.

5. Vorrichtung nach einem der vorhergehenden Ansprüche, bei welcher die Verschiebeeinrichtung so betätigbar ist, daß das Hologramm relativ zu dem Rekonstruktionsstrahl kreisförmig verschoben wird.

6. Vorrichtung nach einem der vorhergehenden Ansprüche 1 bis 4, bei welcher die Verschiebeeinrichtung betätigt werden kann, um das Hologramm relativ zu dem Rekonstruktionsstrahl linear zu verschieben.

7. Vorrichtung nach Anspruch 5, bei welcher die Verschiebeeinrichtung eine Platte umfaßt, welche auf ihrer einen Oberfläche ein Hologramm aufweist, und eine Rotationsantriebseinrichtung zum Rotieren der Platte, wodurch das Hologramm durch Rotation der Platte kreisförmig rotierend bewegt werden kann.

8. Vorrichtung nach einem der vorhergehenden Ansprüche, gekennzeichnet durch einen Lichtmodulator zur Modulierung des Rekonstruktionsstrahls, und ein fotosensitives Medium, welches von dem Abtastlichtstrahl abgetastet wird, welcher betätigbar ist, um ein gewünschtes Bild auf dem fotosensitiven Medium zu erzeugen.

9. Vorrichtung nach einem der vorhergehenden Ansprüche, gekennzeichnet durch einen Konverter, welcher von einem abzutastenden Medium reflektiertes Licht des Abtastlichtstrahls in ein elektrisches Signal umwandeln kann, und durch Einrichtungen zum Detektieren der von dem elektrischen Signal getragenen Information.

10. Verfahren zur Abtastung eines Lichtstrahls, bei welchem ein Hologram bestrahlt wird, welches durch Interferenz eines Objektwellenlichtstrahls und eines Referenzwellenlichtstrahls erzeugt worden ist, und ein Rekonstruktionslichtstrahl relativ zu dem Hologramm bewegt wird, um dadurch einen Abtastlichtstrahl zu erzeugen, dadurch gekennzeichnet, daß der Rekonstruktionslichtstrahl eine Wellenlänge hat, welche von derjenigen der Objektwellen- und der Referenzwellenlichtstrahlen, mit denen das Hologramm erzeugt ist, verschieden ist, um zu bewirken, daß der Abtastlichtstrahl einem gewünschten Abtastort folgt.

## Revendications

1. Appareil de balayage lumineux, comprenant un hologramme obtenu par interférence d'un faisceau lumineux d'onde d'objet et d'un faisceau lumineux d'onde de référence, une source laser ayant pour fonction de produire un faisceau lumineux de reconstitution afin d'éclairer l'hologramme, et un moyen de déplacement qui déplace mutuellement le faisceau lumineux de reconstitution et l'hologramme, afin d'obtenir un faisceau lumineux de balayage, caractérisé en ce que la source laser a pour fonction de produire le faisceau lumineux de reconstitution avec un longueur d'onde différente de celle des faisceaux lumineux d'onde d'objet et d'onde de référence avec lesquels l'hologramme a été obtenu, afin d'assurer que le faisceau lumineux de balayage suit un lieu géométrique de balayage voulu.

2. Appareil selon la revendication 1, où l'hologramme est obtenu par interférence d'un faisceau lumineux d'onde d'objet ayant une surface d'onde sphérique et d'un faisceau lumineux d'onde de référence ayant une surface d'onde plane.

3. Appareil selon la revendication 1, où l'hologramme est obtenu par interférence d'un faisceau lumineux d'onde d'objet ayant une surface d'onde cylindrique et d'un faisceau lumineux d'onde de référence ayant une surface d'onde sphérique.

4. Appareil selon la revendication 1, où l'hologramme est obtenu par interférence d'un faisceau lumineux d'onde d'objet ayant une surface d'onde sphérique divergente et d'un faisceau lumineux d'onde de référence ayant une surface d'onde sphérique convergente.

5. Appareil selon l'une quelconque des revendications précédentes, où le moyen de déplacement a pour fonction de déplacer l'hologramme circulairement par rapport au faisceau de reconstitution.

6. Appareil selon l'une quelconque des revendications 1 à 4, où le moyen de déplacement a pour fonction de déplacer l'hologramme linéairement par rapport au faisceau de reconstitution.

7. Appareil selon la revendication 5, où le moyen de déplacement comprend un disque à la surface duquel se trouve l'hologramme, et un moyen de rotation qui entraîne le disque en rotation, si bien que l'hologramme peut être déplacé en rotation suivant un cercle par la rotation du disque.

8. Appareil selon l'une quelconque des revendications précédentes, comprenant en outre un modulateur de lumière qui module le faisceau de reconstitution et un milieu photosensible qui est balayé par le faisceau lumineux de balayage, dans le but de former une image voulue sur le milieu photosensible.

9. Appareil selon l'une quelconque des revendications précédentes, comprenant en outre un convertisseur qui a pour fonction de transformer la lumière du faisceau lumineux de balayage réfléchi par un milieu à balayer en un signal électrique, et un moyen permettant de détecter l'information portée par le signal électrique.

10. Procédé de balayage au moyen d'un faisceau lumineux qui consiste à éclairer un hologramme, obtenu par interférence d'un faisceau lumineux d'onde d'objet et d'un faisceau lumineux d'onde de référence, au moyen d'un faisceau lumineux de reconstitution, et à déplacer mutuellement le faisceau lumineux de reconstitution et l'hologramme, afin d'obtenir un faisceau lumineux de balayage, caractérisé en ce que le faisceau lumineux de reconstitution possède une longueur d'onde qui est différente de celle des faisceaux lumineux d'onde d'objet et d'onde de référence avec lesquels l'hologramme a été obtenu, afin d'assurer que le faisceau lumineux de balayage suit un lieu géométrique de balayage voulu.

Fig · 1 A

Fig · 1 B

Fig - 1C

Fig. 2

Fig. 3

Fig 4

Fig. 5

Fig. 6

0 041 845

7

Fig · 7

Fig · 8

10/13

Fig · 9

*Fig · 10*

Fig. 11

Fig · 12